# EUROPÄISCHE PATENTSCHRIFT

(11) **EP 2 614 308 B1**
(45) Veröffentlichungstag und Bekanntmachung des Hinweises auf die Patenterteilung: **04.04.2018**
(21) Anmeldenummer: 11764300.7
(22) Anmeldetag: 26.08.2011
(51) Int. Cl.: F24C 7/08, G06F 3/041

(54) **HAUSGERÄTEBEDIENVORRICHTUNG**
DOMESTIC-APPLIANCE-OPERATING DEVICE
DISPOSITIF DE COMMANDE D'APPAREIL MÉNAGER

(30) Priorität: 10.09.2010 ES 201031350 P
(43) Veröffentlichungstag der Anmeldung: 17.07.2013
(73) Patentinhaber: BSH Hausgeräte GmbH, 81739 München (DE)
(72) Erfinder: BUÑUEL MAGDALENA, Miguel Angel, 50017 Zaragoza (ES); CUARTIELLES RUIZ, Diego, 50012 Zaragoza (ES); ESTER SOLA, Francisco Javier, 50001 Zaragoza (ES); GARCIA JIMENEZ, Jose-Ramon, 50009 Zaragoza (ES); HERNANDEZ BLASCO, Pablo Jesus, 50410 Cuarte de Huerva (Zaragoza) (ES); LLORENTE GIL, Sergio, 50009 Zaragoza (ES); LORENTE PEREZ, Alfonso, 50019 Zaragoza (ES); LUCIA GIL, Oscar, 50006 Zaragoza (ES); MAIRAL SERRANO, Carlos Vicente, 50015 Zaragoza (ES); MANTILLA CHACÓN, Henry Mauricio, 50002 Zaragoza (ES); MEDIANO HEREDIA, Arturo, 50012 Zaragoza (ES); PARICIO AZCONA, Jose Joaquin, 50019 Zaragoza (ES); PEREZ CABEZA, Pilar, 50008 Zaragoza (ES); PLANAS LAYUNTA, Fernando, 50009 Zaragoza (ES); RIVERA PEMAN, Julio, 50410 Cuarte de Huerva (Zaragoza) (ES); ALAMAN AGUILAR, Jorge, 50008 Zaragoza (ES)
(86) Internationale Anmeldenummer: PCT/IB2011/053755
(87) Internationale Veröffentlichungsnummer: WO 2012/032432

(56) Entgegenhaltungen:
- EP-A1- 2 110 834
- EP-A2- 0 780 981
- EP-A2- 1 953 915
- EP-A2- 2 169 315
- DE-A1-102008 041 517
- US-A- 5 760 715

## Beschreibung

Die Erfindung geht aus von einer Hausgerätebedienvorrichtung nach dem Oberbegriff des Anspruchs 1.

Die Druckschrift DE 10 2008 041 517 A1 offenbart eine Hausgerätebedienvorrichtung mit einer Touch-Bedienoberfläche an einer Oberseite einer elektrisch isolierenden Bedienblende. Auf einer Unterseite der Bedienblende ist in einem Siebdruckverfahren eine leitfähige Beschichtung aufgebracht, die eine unterhalb der Touch-Bedienoberfläche angeordnete Sensorplatte und ein Leitelement bildet, welches die Sensorplatte elektrisch leitend mit einer Touch-Sensoreinheit kontaktiert.

Aus der Druckschrift EP 2 110 834 A1 ist eine Bedienvorrichtung bekannt, welche insbesondere für ein Fahrzeug vorgesehen ist, mit einer eine Touch-Bedienoberfläche umfassenden Bedienblende, einer unterhalb der Touch-Bedienoberfläche angeordneten Sensorplatte und einem Leitelement, welches mit der Sensorplatte verbunden ist. Ferner offenbart die Druckschrift ein elektrisch leitendes Element, welches mit einer Referenzspannung verbunden ist.

Die Druckschrift EP 2 169 315 A2 offenbart eine Bedienblende für ein Haushaltsgerät mit einem Blendenkörper, wobei ein Sensorelement auf der Rückseite des Blendenkörpers angeordnet ist. Das Sensorelement bildet zusammen mit dem Blendenkörper ein kapazitives Sensorfeld, wobei das Sensorelement mit einer Konvertierungselektronik elektrisch leitend verbunden ist und von einem Abschirmelement umgeben ist.

Die Druckschrift EP 1 953 915 A2 offenbart eine Hausgerätebedienvorrichtung nach dem Oberbegriff des Anspruchs 1 und stellt den nächstliegenden Stand der Technik dar. Die Aufgabe der Erfindung besteht insbesondere darin, eine gattungsgemäße Hausgerätebedienvorrichtung mit verbesserten Eigenschaften hinsichtlich eines flexiblen Designs bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Hausgerätebedienvorrichtung, insbesondere einer Kochfeldbedienvorrichtung, mit einer eine Touch-Bedienoberfläche umfassenden Bedienblende, einer unterhalb der Touch-Bedienoberfläche angeordneten Sensorplatte und einer Signalübertragungseinheit, die die Sensorplatte mittels eines Leitelements mit einer Touch-Sensoreinheit elektrisch leitend verbindet.

Es wird vorgeschlagen, dass die Signalübertragungseinheit zumindest eine Abschirmeinheit aufweist. Unter "vorgesehen" soll insbesondere speziell programmiert, ausgelegt und/oder ausgestattet verstanden werden. Unter einer "Bedienblende" soll insbesondere eine in einem montierten Zustand durch einen Bediener anfassbare Wand eines Hausgeräts, insbesondere eine Kochfeldplatte eines Kochfelds, verstanden werden, die einen Teilbereich aufweist, der eine Touch-Bedienoberfläche bildet. Vorzugsweise ist die Bedienblende zumindest teilweise aus einem elektrisch isolierenden Material, insbesondere einer Glaskeramik, gebildet. Besonders vorteilhaft ist der die Touch-Bedienoberfläche bildende Teilbereich der Bedienblende aus einem elektrisch isolierenden Material, insbesondere einer Glaskeramik gebildet. Unter "elektrisch isolierend" soll insbesondere mit einem spezifischen elektrischen Widerstand von mindestens 10⁸ Ωm, insbesondere wenigstens 10¹⁰ Ωm und vorteilhaft zumindest 10¹² Ωm bei 20°C verstanden werden. Unter einer "Touch-Bedienoberfläche" soll insbesondere ein Oberflächenbereich der Bedienblende verstanden werden, der ein Bedienelement bildet, welches durch Berühren, insbesondere auslenkungsfrei, betätigbar ist. Unter einem "Betätigen" eines Bedienelements soll insbesondere ein Durchführen eines Bedienvorgangs oder eines Teils eines Bedienvorgangs mit Hilfe des Bedienelements verstanden werden. Vorzugsweise ist der die Touch-Bedienoberfläche bildende Teilbereich der Bedienblende auf einer einem Bediener zugewandten ersten Seite der Bedienblende mit Markierungen versehen. Unter einer "Sensorplatte" soll insbesondere eine elektrisch leitende Platte verstanden werden, die eine Elektrode bildet und elektrisch leitend mit einer Touch-Sensoreinheit verbunden ist. Vorzugsweise weist die Sensorplatte zumindest eine Ausnehmung auf. Unter "elektrisch leitend" soll insbesondere mit einem spezifischen elektrischen Widerstand von höchstens 10⁻⁴ Ωm, insbesondere maximal 10⁻⁵ Ωm und vorteilhaft höchstens 10⁻⁶ Ωm bei 20°C verstanden werden. Darunter, dass die Sensorplatte "unterhalb" der Touch-Bedienoberfläche angeordnet ist, soll insbesondere verstanden werden, dass die Sensorplatte an einer der ersten Seite gegenüberliegenden zweiten Seite der Bedienblende angeordnet, insbesondere unmittelbar angeordnet und vorzugsweise befestigt ist. Insbesondere umschließt bei einer Blickrichtung senkrecht zur Touch-Bedienoberfläche eine Außenkonturlinie der Sensorplatte eine Außenkonturlinie der Touch-Bedienoberfläche vollständig. Vorzugsweise fallen bei einer Blickrichtung senkrecht zur Touch-Bedienoberfläche die Außenkonturlinien von Sensorplatte und Touch-Bedienoberfläche zusammen. Unter einer "Signalübertragungseinheit" soll insbesondere eine Einheit verstanden werden, die zumindest ein Leitelement umfasst, welches die Sensorplatte mit der Touch-Sensoreinheit elektrisch leitend verbindet. Unter einer "Touch-Sensoreinheit" soll insbesondere eine elektronische Einheit verstanden werden, die elektrisch leitend mit einer Sensorplatte verbunden ist und die dazu vorgesehen ist, die Sensorplatte elektrisch aufzuladen und eine Änderung eines von der Sensorplatte ausgehenden elektrischen Felds zu detektieren. Vorzugsweise ist die Touch-Sensoreinheit mit einer Steuer- und/oder Regeleinheit des Hausgeräts verbunden und ist zu einer Eingabe von zumindest einem Betriebsparameter des Hausgeräts vorgesehen. Darunter, dass die Sensorplatte mittels des Leitelements mit einer Touch-Sensoreinheit "elektrisch leitend" verbunden wird, soll insbesondere verstanden werden, dass eine elektrisch leitende Verbindung zwischen der Sensorplatte und der Touch-Sensoreinheit existiert, welche das Leitelement umfasst. Unter einer "Abschirmeinheit" der Signalübertragungseinheit soll insbesondere eine von einer Elektronikplatine und/oder der Bedienblende differierende Einheit verstanden werden, welche dazu vorgesehen ist, zumindest eine wesentliche Beeinflussung eines von dem Leitelement ausgehenden elektrischen Felds bei einer Kontaktierung eines Bereichs der Bedienblende oberhalb des Leitelements zu unterbinden. Unter einer "wesentlichen Beeinflussung" des von dem Leitelement ausgehenden elektrischen Felds soll insbesondere eine Änderung des elektrischen Felds verstanden werden, die von der Touch-Sensoreinheit als ein auslösendes Ereignis erfasst wird. Die Kontaktierung des Bereichs der Bedienblende oberhalb des Leitelements kann dabei von einem Bediener und/oder einem Kochgeschirr und/oder jedem beliebigen anderen Objekt erfolgen.

Durch eine solche Ausgestaltung kann bei einer zuverlässigen Funktion der Touch-Bedienoberfläche eine Beabstandung der Sensorplatte von der Touch-Sensoreinheit ermöglicht werden. Insbesondere kann hierdurch eine Platzierung der Touch-Bedienelemente in besonders geeigneten Teilbereichen der Bedienblende erfolgen. Ferner können verschiedene Bedienblenden mit einer unterschiedlichen Anordnung von Touch-Bedienoberflächen bereitgestellt werden, bei denen eine Anordnung der Touch-Sensoreinheiten identisch ist und die sich lediglich durch eine Anordnung der Sensorplatten und durch eine Ausgestaltung der Signalübertragungseinheit unterscheiden. Des Weiteren kann eine kommerziell verfügbare Touch-Sensoreinheit verwendet werden. Dies ermöglicht einerseits ein vorteilhaft flexibleres Design und andererseits eine Reduzierung eines Montageaufwands und eine Kostenreduktion. Insbesondere wenn die Signalübertragungseinheit Beschichtungen auf der Bedienblende aufweist, kann besonders einfach und kostengünstig eine Variation für verschiedene Ausgestaltungen der Bedienblende vorgenommen werden. Des Weiteren können, insbesondere bei Gargeräten oder Kochfeldern, die Touch-Bedienoberfläche und die zugehörige Signalfläche in einem Flächenbereich der Bedienblende vorgesehen sein, welcher eine Temperatur oberhalb einer für einen zuverlässigen Betrieb der Signaleinheit zulässigen Temperaturobergrenze aufweist. Hierdurch kann eine vorteilhafte Nähe einer Kochzone eines Kochfelds und einer Touch-Bedienoberfläche erreicht werden.

Vorteilhaft sind die Sensorplatte und die Touch-Sensoreinheit wesentlich beabstandet. Darunter, dass die Sensorplatte und die Touch-Sensoreinheit "wesentlich beabstandet" sind, soll insbesondere verstanden werden, dass ein Abstand zwischen der Sensorplatte und der Touch-Sensoreinheit in einer zu der Bedienblende parallelen Ebene zumindest 2-mal, insbesondere 5-mal, vorteilhaft 10-mal und besonders vorteilhaft 20-mal so groß ist wie eine maximale Erstreckungslänge der Sensorplatte in der Ebene. Unter einem "Abstand zwischen der Sensorplatte und der Touch-Sensoreinheit in einer zu der Bedienblende parallelen Ebene" soll bei einer Projektion der Sensorplatte und der Touch-Sensoreinheit auf die Bedienblende insbesondere eine kleinste Distanz zwischen der Konturlinie der Sensorplatte und einer Konturlinie der Touch-Sensoreinheit verstanden werden. Unter einer "maximalen Erstreckungslänge der Sensorplatte in der Ebene" soll bei einer Projektion der Sensorplatte auf die Bedienblende insbesondere eine maximale Distanz zwischen zwei Randpunkten der Konturlinie der Sensorplatte verstanden werden. Hierdurch kann eine vorteilhafte Steigerung eines Bedienkomforts ermöglicht werden, da die Touch-Bedienoberfläche in einem Teilbereich der Bedienblende angeordnet werden kann, der für die Touch-Sensoreinheit, insbesondere durch eine erhöhte Temperatur, ausgeschlossen ist. Des Weiteren kann eine Kostenreduktion erzielt werden, da verschiedene Ausgestaltungen einer Bedienblende mit einer Touch-Bedienoberfläche erreicht werden können, die sich lediglich durch eine Position einer Sensorplatte und durch eine Ausführung einer Signalübertragungseinheit unterscheiden.

Ferner wird vorgeschlagen, dass die Sensorplatte und das Leitelement einstückig als eine leitfähige Beschichtung ausgeführt sind. Darunter, dass die Sensorplatte und das Leitelement "einstückig als eine leitfähige Beschichtung" ausgeführt sind, soll insbesondere verstanden werden, dass die Sensorplatte und das Leitelement eine zusammenhängende, elektrisch leitende Beschichtung auf einem Substrat bilden. Vorzugsweise wurden die Sensorplatte und das Leitelement in einem einzigen Beschichtungsprozess aufgebracht. Vorzugsweise ist die leitfähige Beschichtung unmittelbar an der zweiten Seite der Bedienblende und/oder an einer weiteren Beschichtung an der zweiten Seite der Bedienblende aufgebracht.

Durch diese Ausgestaltung kann eine zuverlässige Kontaktierung der Sensorplatte mit der Bedienblende erzielt werden. Ferner kann besonders Platz sparend eine besonders zuverlässige elektrische Kontaktierung zwischen der Sensorplatte und dem Leitelement bereitgestellt werden. Vorzugsweise beträgt eine Dicke der leitfähigen Beschichtung mindestens 30 µm, insbesondere mindestens 50 µm, vorteilhaft mindestens 70 µm und besonders vorteilhaft mindestens 90 µm. Hierdurch kann eine ausreichend hohe elektrische Leitfähigkeit der Beschichtung erreicht werden. Vorzugsweise beträgt die Dicke der leitfähigen Beschichtung höchstens 200 µm, insbesondere maximal 170 µm, vorteilhaft höchstens 140 µm und besonders vorteilhaft maximal 110 µm. Hierdurch kann Material eingespart und ein Zeitbedarf für eine Herstellung reduziert werden. Vorzugsweise ist die leitfähige Beschichtung durch ein Kathodenzerstäubungsverfahren auf das Substrat aufgebracht und besteht insbesondere aus reinen Metallen. Hierdurch kann eine Beschichtung der Bedienblende bei einer niedrigen Temperatur erreicht werden, was einer möglichen Beschädigung und/oder Beeinträchtigung einer Stabilität der Bedienblende entgegenwirkt. Vorzugsweise ist die leitfähige Beschichtung aus einer pastenartigen Suspension hergestellt, die zumindest fein verteilte Metallteilchen, insbesondere in Form von Pulver und/oder Flocken und/oder Folie und/oder Streifen, einen anorganischer Träger zur Bindung der Beschichtung an das Substrat, insbesondere eine Glasfritte, und ein Bindemittel, insbesondere Diethylenglykol und/oder ein Monobutylether des Diethylenglykols, aufweist und die vorzugsweise durch ein Siebdruckverfahren auf das Substrat aufgebracht ist. Die Metallteilchen machen zumindest 5%, insbesondere wenigstens 30%, vorzugsweise mindestens 50% und besonders vorteilhaft zumindest 80% und vorteilhaft höchstens 95% einer Gesamtmasse der Suspension aus und umfassen vorzugsweise Edelmetalle, insbesondere Gold und/oder Silber und/oder Platin und/oder Palladium, und/oder Legierungen aus Edelmetallen und/oder Nickel und/oder Kupfer und/oder Aluminium und/oder Cobalt und/oder Eisen und/oder Wismut. Vorzugsweise wird die Suspension nach einem Aufbringen auf das Substrat bei einer Temperatur zwischen 600°C und 700°C gesintert, wobei das Bindemittel verdampft und/oder verbrannt wird. Hierdurch können Herstellungskosten reduziert werden.

Die Abschirmeinheit umfasst zumindest ein mit einem Referenzspannungsanschluss verbundenes elektrisch leitendes Element, welches dazu vorgesehen ist, ein elektrisches Feld des Leitelements abzuschirmen. Insbesondere ist das elektrisch leitfähige Element eine elektrisch leitfähige Beschichtung, vorzugsweise auf der zweiten Seite der Bedienblende. Darunter, dass das elektrisch leitende Element dazu vorgesehen ist, das elektrische Feld des Leitelements abzuschirmen, soll insbesondere verstanden werden, dass das elektrisch leitende Element dazu vorgesehen ist, zumindest eine wesentliche Beeinflussung eines von dem Leitelement ausgehenden elektrischen Felds bei einer Kontaktierung eines Bereichs der Bedienblende oberhalb des Leitelements zu unterbinden. Unter einem "Referenzspannungsanschluss" soll insbesondere ein elektrischer Anschluss mit einem konstanten elektrischen Potential verstanden werden. Durch eine solche Ausgestaltung kann eine wesentliche Beeinflussung des vom Leitelement ausgehenden elektrischen Felds bei einer Kontaktierung eines Flächenbereichs der Bedienblende oberhalb des Leitelements unterbunden werden, da elektrische Ladungen vom elektrisch leitenden Element abgeführt werden können.

In einer besonders bevorzugten Ausgestaltung wird vorgeschlagen, dass der Referenzspannungsanschluss ein Erdungsanschluss ist. Vorzugsweise ist der Erdungsanschluss ein Schutzerdungsanschluss und besonders vorteilhaft ein Funktionserdungsanschluss. Hierdurch kann eine besonders einfache und vorteilhafte Abschirmung des Leitelements ermöglicht werden.

Das elektrisch leitende Element ist in einer zur Touch-Bediehoberfläche parallelen Richtung zumindest teilweise seitlich neben dem Leitelement angeordnet. Darunter, dass "das elektrisch leitende Element in einer zur Touch-Bedienoberfläche parallelen Richtung zumindest teilweise seitlich neben dem Leitelement angeordnet ist", soll insbesondere verstanden werden, dass zumindest eine, zur Touch-Bedienoberfläche parallele Ebene das Leitelement und das elektrisch leitende Element schneidet. Hierdurch kann eine besonders einfache Abschirmung des Leitelements erreicht werden, da auf ein elektrisch isolierendes Element zwischen dem Leitelement und dem elektrisch leitenden Element verzichtet werden kann.

In einer weiteren Ausgestaltung der Erfindung wird vorgeschlagen, dass das elektrisch leitende Element zumindest teilweise zwischen dem Leitelement und der Bedienblende angeordnet ist. Darunter, dass "das elektrisch leitende Element zumindest teilweise zwischen dem Leitelement und der Bedienblende angeordnet ist", soll insbesondere verstanden werden, dass zumindest eine zur Touch-Bedienoberfläche senkrechte Gerade das Leitelement und das elektrisch leitende Element schneidet. Hierdurch kann eine besonders effektive Abschirmung des Leitelements erreicht werden. Vorzugsweise weist das Leitelement Aussparungen auf. Hierdurch kann Material eingespart werden und es können Kosten reduziert werden.

Ferner wird vorgeschlagen, dass die Abschirmeinheit zumindest ein dielektrisches Element umfasst, welches dazu vorgesehen ist, das Leitelement elektrisch abzuschirmen. Unter einem "dielektrischen Element" soll insbesondere ein elektrisch isolierendes Element verstanden werden, welches aufgrund einer dielektrischen Polarisation zu einer Schwächung eines elektrischen Felds führt. Darunter, dass das dielektrische Element dazu vorgesehen ist, "das Leitelement elektrisch abzuschirmen", soll insbesondere verstanden werden, dass das dielektrische Element das Leitelement gegenüber anderen Bauteilen, insbesondere dem elektrisch leitende Element, elektrisch isoliert und/oder eine wesentliche Beeinflussung eines von dem Leitelement ausgehenden elektrischen Felds bei einer Kontaktierung eines Bereichs der Bedienblende oberhalb des Leitelements unterbindet. Vorteilhaft weist das dielektrische Element einen spezifischen elektrischen Widerstand auf, der in einer gleichen Größenordnung wie ein spezifischer elektrischer Widerstand der Bedienblende liegt. Ferner weist das dielektrische Element vorzugsweise eine Dielektrizitätszahl auf, die größer ist als eine Dielektrizitätszahl der Bedienblende. Hierdurch können weitere vorteilhafte Ausgestaltungen der Hausgerätebedienvorrichtung ermöglicht werden. Vorzugsweise ist das dielektrische Element als eine elektrisch isolierende Beschichtung, insbesondere eine keramische Beschichtung und besonders vorteilhaft eine Emaille, ausgebildet. Hierdurch können Herstellungskosten reduziert werden. Vorzugsweise beträgt eine Dicke der isolierenden Beschichtung mindestens 30 µm, insbesondere mindestens 50 µm, vorteilhaft mindestens 70 µm und besonders vorteilhaft mindestens 100 µm. Hierdurch kann eine ausreichend hohe Abschirmung erreicht werden. Vorzugsweise beträgt die Dicke der isolierenden Beschichtung höchstens 200 µm, insbesondere maximal 170 µm, vorteilhaft höchstens 140 µm und besonders vorteilhaft maximal 110 µm. Hierdurch kann Material eingespart und ein Zeitbedarf für eine Herstellung reduziert werden. Vorzugsweise wird das dielektrische Element zwischen dem Leitelement und dem mit dem Referenzspannungsanschluss verbundenen elektrisch leitenden Element eingebracht. Hierdurch kann eine elektrische Isolierung zwischen dem Leitelement und dem elektrisch leitenden Element bereitgestellt werden.

In einer weiteren Ausgestaltung der Erfindung wird vorgeschlagen, dass das dielektrische Element zumindest teilweise zwischen dem Leitelement und der Bedienblende angeordnet ist. Darunter, dass "das dielektrische Element zumindest teilweise zwischen dem Leitelement und der Bedienblende angeordnet ist", soll insbesondere verstanden werden, dass zumindest eine zur Touch-Bedienoberfläche senkrechte Gerade das Leitelement und das dielektrische Element schneidet. Vorzugsweise liegt das dielektrische Element unmittelbar am Leitelement und/oder an der Bedienblende an. Hierdurch kann bei einer Kontaktierung der Bedienblende in einem Flächenbereich oberhalb des Leitmittels eine Abschwächung eines Einflusses auf das elektrische Feld erreicht werden.

In einer bevorzugten Ausgestaltung wird vorgeschlagen, dass die Signalübertragungseinheit ein Federelement umfasst, das dazu vorgesehen ist, das Leitelement mit der Touch-Sensoreinheit elektrisch leitend zu verbinden. Unter einem "Federelement" soll insbesondere ein elastisches Element verstanden werden, welches in einem montierten Zustand, vorzugsweise mit einer Vorspannung, zwischen dem Leitelement und der Touch-Sensoreinheit angeordnet ist. Vorzugsweise besteht das Federelement aus einem elektrisch leitenden Material. Vorzugsweise ist das Federelement ein Leitgummi, eine metallische Schraubenfeder oder eine metallische Blattfeder. Hierdurch kann eine zuverlässige elektrische Kontaktierung des Leitelements mit der Touch-Sensoreinheit erreicht werden. Die erfindungsgemäße Hausgerätebedienvorrichtung eignet sich für sämtliche, einem Fachmann als sinnvoll erscheinende Hausgeräte, wie insbesondere Gargeräte, Kühlgeräte, Spüler usw., und besonders vorteilhaft Kochfelder.

Weitere Vorteile ergeben sich aus den folgenden Zeichnungsbeschreibungen. In den Zeichnungen 4a und 4b sind Ausführungsbeispiele der Erfindung dargestellt. Die Zeichnungen, die Beschreibungen und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: ein Glaskeramikkochfeld mit einer Hausgerätebedienvorrichtung in einer Draufsicht,
- Fig. 2: die Hausgerätebedienvorrichtung aus Fig. 1 mit einer Abschirmeinheit, die ein dielektrisches Element umfasst, in einer nicht maßstabsgetreuen Schnittdarstellung entlang einer Linie II-II in Fig. 1,
- Fig. 3: eine Hausgerätebedienvorrichtung in einer nicht maßstabsgetreuen Schnittdarstellung mit einer Abschirmeinheit, welche ein dielektrisches Element und ein elektrisch leitendes Element umfasst,
- Fig. 4a: eine weitere Hausgerätebedienvorrichtung in einer nicht maßstabsgetreuen Schnittdarstellung mit einer Abschirmeinheit, welche ein elektrisch leitendes Element umfasst,
- Fig. 4b: die Hausgerätebedienvorrichtung aus Fig. 4a in einer nicht maßstabsgetreuen Draufsicht bei entfernter Kochfeldplatte.

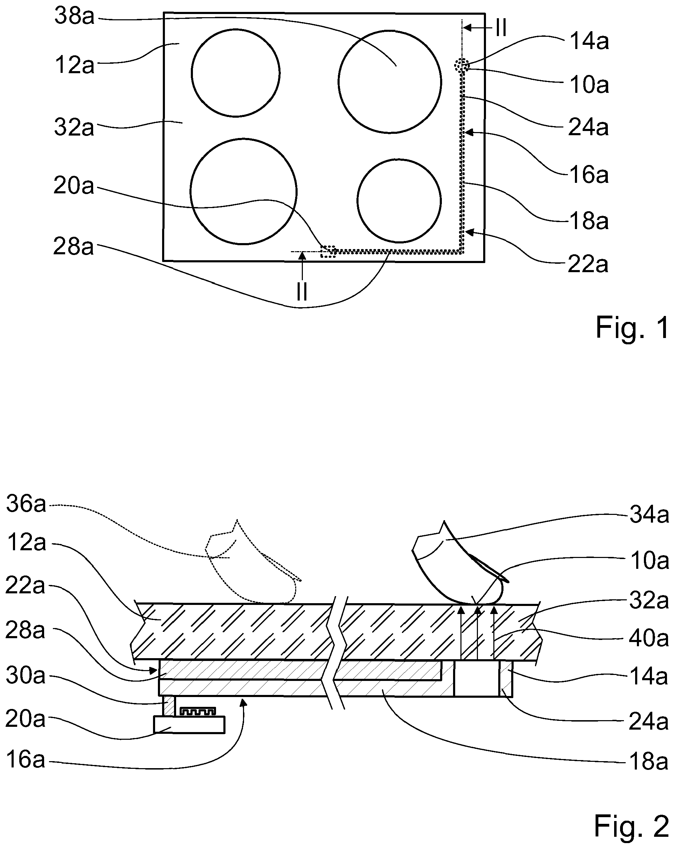

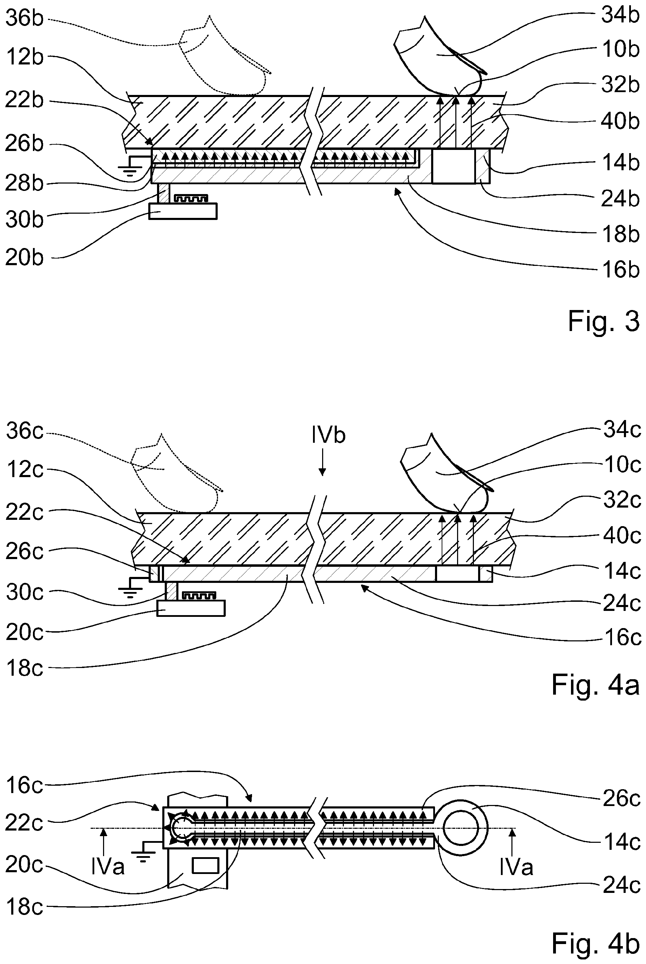

Figur 1 zeigt in einer Draufsicht ein Glaskeramikkochfeld mit einer Hausgerätebedienvorrichtung. Das Glaskeramikkochfeld umfasst eine Kochfeldplatte 32a aus Glaskeramik, die eine Bedienblende 12a der Hausgerätevorrichtung bildet. Die Bedienblende 12a weist einen Teilbereich auf, der eine Touch-Bedienoberfläche 10a darstellt und der von einem Bediener anfassbar ist. Die Touch-Bedienoberfläche 10a ist in bekannter Weise durch eine keramische Beschichtung auf einer dem Bediener in einem betriebsbereiten Zustand des Glaskeramikkochfelds zugewandten Oberseite der Bedienblende 12a markiert. Die Touch-Bedienoberfläche 10a ist dazu vorgesehen, durch eine Berührung mit einem Finger 34a betätigt zu werden. Im vorliegenden Fall ist die Touch-Bedienoberfläche 10a dazu vorgesehen, eine neben der Touch-Bedienoberfläche 10a angeordnete Kochzone 38a der Kochfeldplatte 32a zu- oder abzuschalten und zu einer Einstellung einer Heizleistung anzuwählen. Hierzu verfügt die Hausgerätebedienvorrichtung über eine unterhalb der Bedienblende 12a angeordnete Sensorplatte 14a, die bei einer zur Touch-Bedienoberfläche 10a senkrechten Blickrichtung eine identischen Außenkontur wie die Touch-Bedienoberfläche 10a aufweist. Die Sensorplatte 14a ist in einem betriebsbereiten Zustand des Glaskeramikkochfelds exakt unter der Touch-Bedienoberfläche 10a angeordnet. Die Sensorplatte 14a gleicht einer flachen Kreisringscheibe (vgl. Sensorplatte 14c in Figur 4b). Die Sensorplatte 14a ist mittels eines Leitelements 18a einer Signalübertragungseinheit 16a mit einer von der Sensorplatte 14a wesentlich beabstandeten Touch-Sensoreinheit 20a elektrisch leitend verbunden. Die Touch-Sensoreinheit 20a ist dazu vorgesehen, eine Veränderung eines von der Sensorplatte 14a ausgehenden elektrischen Felds 40a zu registrieren (vgl. Figur 2). Um eine zuverlässige elektrisch leitende Kontaktierung der Touch-Sensoreinheit 20a mit dem Leitelement 18a der Signalübertragungseinheit 16a sicherzustellen, umfasst die Signalübertragungseinheit 16a ein elastisches Federelement 30a, welches mit einer Vorspannung zwischen dem Leitelement 18a und einer Kontaktstelle der Touch-Sensoreinheit 20a angeordnet ist. Das Federelement 30a ist aus einem Leitgummi gebildet. Alternativ kann das Federelement 30a auch aus einer Schraubenfeder und/oder Blattfeder und/oder jedem beliebigen, einem Fachmann als sinnvoll erscheinenden federnden Element gebildet sein. Um sicherzustellen, dass nur eine Berührung durch einen Finger 34a im Bereich der Touch-Bedienoberfläche 10a als eine Betätigung der Touch-Bedienoberfläche 10a erkannt wird, umfasst die Signalübertragungseinheit 16a eine Abschirmeinheit 22a. Die Abschirmeinheit 22a verhindert, dass eine Berührung der Bedienblende 12a mit einem Finger 36a in einem Bereich oberhalb des Leitelements 18a zu einer wesentlichen Beeinflussung eines vom Leitelement 18a ausgehenden elektrischen Felds führt, welche von der Touch-Sensoreinheit 20a als eine Betätigung der Touch-Bedienoberfläche 10a erkannt wird.

Figur 2 zeigt eine nicht maßstabsgetreue Schnittdarstellung durch die Hausgerätebedienvorrichtung entlang einer Linie II-II in Figur 1. Die Abschirmeinheit 22a umfasst ein dielektrisches Element 28a, welches dazu vorgesehen ist, ein Leitelement 18a elektrisch abzuschirmen. Hierzu ist das dielektrische Element 28a in einer Umgebung des Leitelements 18a zwischen der Bedienblende 12a und dem Leitelement 18a angeordnet. Die Sensorplatte 14 und das Leitelement 18a sind einstückig als eine elektrisch leitfähige Beschichtung 24a in einem Siebdruckverfahren auf einer der Oberseite gegenüberliegenden Unterseite der Bedienblende 12a aufgebracht. Das dielektrische Element 28a ist eine in einem Siebdruckverfahren aufgebrachte keramische Beschichtung der Bedienblende 12a mit einer größeren Dielektrizitätszahl als die Bedienblende 12a. Bei einer Herstellung der Hausgerätebedienvorrichtung wird zuerst das dielektrische Element 28a auf die Unterseite der Bedienblende 12a beschichtet. Daraufhin wird die elektrisch leitfähige Beschichtung 24a aufgebracht, die die Sensorplatte 14a und das Leitelement 18a bildet. Das dielektrische Element 28a schwächt ein vom Leitelement 18a ausgehendes elektrisches Feld in der Umgebung des Leitelements 18a in Richtung der Bedienblende 12a ab. Bei einer Berührung der Bedienblende 12a mit einem Finger 36a in einem Bereich oberhalb des Leitelements 18a kommt es nur zu einer geringen Beeinflussung des elektrischen Felds, die von der Touch-Sensoreinheit 20a übergangen wird. Bei einer Berührung der Bedienblende 12a im Bereich der Touch-Bedienoberfläche 10a kommt es hingegen zu einer starken Beeinflussung des von der Sensorplatte 14a ausgehenden elektrischen Felds 40a. Die Touch-Sensoreinheit 20a registriert eine Betätigung der Touch-Bedienoberfläche 10a.

Die Figuren 4a und 4b zeigen Ausführungsbeispiele einer erfindungsgemäßen Hausgerätebedienvorrichtung. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibungen der anderen Ausführungsbeispiele, insbesondere der Figuren 1 und 2, verwiesen werden kann. Zur Unterscheidung der Ausführungsbeispiele sind die Buchstaben "a", "b" und "c" den Bezugszeichen der Ausführungsbeispiele angehängt. Figur 3 zeigt eine nicht maßstabsgetreue Schnittdarstellung durch eine Hausgerätebedienvorrichtung mit einer bevorzugten Ausgestaltung einer Abschirmeinheit 22b. Die Abschirmeinheit 22b umfasst ein mit einem Referenzspannungsanschluss verbundenes elektrisch leitendes Element 26b, welches dazu vorgesehen ist, ein elektrisches Feld des Leitelements 18b abzuschirmen. Der Referenzspannungsanschluss ist ein Schutzerdungsanschluss des Glaskeramikkochfelds. Das elektrisch leitende Element 26b ist zwischen einer Bedienblende 12b und einem Leitelement 18b angeordnet. Zur elektrischen Isolierung ist zwischen dem Leitelement 18b und dem elektrisch leitenden Element 26b ein dielektrisches Element 28b angeordnet. Eine Sensorplatte 14b und das Leitelement 18b sind einstückig als eine elektrisch leitfähige Beschichtung 24b in einem Siebdruckverfahren auf einer Unterseite der Bedienblende 12b aufgebracht. Das elektrisch leitende Element 26b ist eine zu der leitfähigen Beschichtung 24b identische Beschichtung. Das dielektrische Element 28b ist eine in einem Siebdruckverfahren aufgebrachte keramische Beschichtung. Bei einer Herstellung der Hausgerätebedienvorrichtung wird zuerst das elektrisch leitende Element 26b in einem Siebdruckverfahren an der Unterseite der Bedienblende 12b aufgebracht. Anschließend wird das dielektrische Element 28b in einem Siebdruckverfahren über das elektrisch leitende Element 26b aufgebracht. Schließlich wird die leitfähige Beschichtung 24b, die die Sensorplatte 14b und das Leitelement 18b bildet, auf die Bedienblende 12b und das dielektrische Element 28b aufgebracht. Das elektrisch leitende Element 26b schirmt ein vom Leitelement 18b ausgehendes elektrisches Feld in der Umgebung des Leitelements 18b in Richtung der Bedienblende 12b ab. Bei einer Berührung der Bedienblende 12b mit einem Finger 36b in einem Bereich oberhalb des Leitelements 18b kommt es nur zu einer geringen Beeinflussung des elektrischen Felds, die von einer Touch-Sensoreinheit 20b übergangen wird. Bei einer Berührung der Bedienblende 12b im Bereich einer Touch-Bedienoberfläche 10b kommt es hingegen zu einer starken Beeinflussung des von der Sensorplatte 14b ausgehenden elektrischen Felds 40b. Die Touch-Sensoreinheit 20b registriert eine Betätigung der Touch-Bedienoberfläche 10b. In einer alternativen Ausgestaltung kann die das elektrisch leitende Element 26b bildende Beschichtung auch Ausnehmungen aufweisen und insbesondere in einer Gitterstruktur ausgeführt sein. Hierdurch kann Material eingespart werden.

Figur 4a zeigt eine nicht maßstabsgetreue Schnittdarstellung durch eine Hausgerätebedienvorrichtung mit einer besonders bevorzugten Ausgestaltung einer Abschirmeinheit 22c. Die Abschirmeinheit 22c umfasst ein mit einem Referenzspannungsanschluss verbundenes elektrisch leitendes Element 26c, welches dazu vorgesehen ist, ein elektrisches Feld eines Leitelements 18c abzuschirmen. Der Referenzspannungsanschluss ist ein Schutzerdungsanschluss des Glaskeramikkochfelds. Das elektrisch leitende Element 26c ist in einer zu einer Bedienblende 12c parallelen Richtung seitlich neben dem Leitelement 18c angeordnet. Figur 4b zeigt diesen Sachverhalt in einer nicht maßstabsgetreuen Draufsicht auf die Hausgerätevorrichtung, wobei die Bedienblende 12c zu einer besseren Übersicht nicht dargestellt ist. Das elektrisch leitende Element 26c umgreift das Leitelement 18c nahezu vollständig bis auf eine Ausnehmung in einer Umgebung der Sensorplatte 14c. Das elektrisch leitende Element 26c und das Leitelement 18c sind durch eine möglichst kleine Beabstandung voneinander elektrisch isoliert. Eine Sensorplatte 14c und das Leitelement 18c sind einstückig als eine elektrisch leitfähige Beschichtung 24c in einem Siebdruckverfahren auf eine Unterseite der Bedienblende 12c aufgebracht. Das elektrisch leitende Element 26c ist eine zu der leitfähigen Beschichtung 24c identische Beschichtung. Bei einer Herstellung der Hausgerätebedienvorrichtung werden die leitfähige Beschichtung 24c und das elektrisch leitende Element 26c in einem Arbeitsschritt aufgebracht. Ein Aufbringen der leitfähigen Beschichtung 24c und des elektrisch leitenden Elements 26c erfolgt in einem Siebdruckverfahren. Alternativ ist jedoch auch denkbar, die leitfähige Beschichtung 24c und das elektrisch leitende Element 26c durch ein Kathodenzerstäubungsverfahren aufzubringen. Hierbei empfiehlt es sich, die leitfähige Beschichtung 24c und das elektrisch leitende Element 26c als eine zusammenhängende Fläche auf die Unterseite der Bedienblende 12c aufzubringen und anschließend eine räumliche Trennung der leitfähigen Beschichtung 24c und des elektrisch leitenden Elements 26c durch ein Laserablationsverfahren vorzunehmen. Das elektrisch leitende Element 26c schirmt ein vom Leitelement 18c ausgehendes elektrisches Feld in der Umgebung des Leitelements 18c in Richtung der Bedienblende 12c ab. Bei einer Berührung der Bedienblende 12c mit einem Finger 36c in einem Bereich oberhalb des Leitelements 18c kommt es nur zu einer geringen Beeinflussung des elektrischen Felds, die von einer Touch-Sensoreinheit 20c übergangen wird. Bei einer Berührung der Bedienblende 12c im Bereich einer Touch-Bedienoberfläche 10c kommt es hingegen zu einer starken Beeinflussung eines von der Sensorplatte 14c ausgehenden elektrischen Felds 40c. Die Touch-Sensoreinheit 20c registriert eine Betätigung der Touch-Bedienoberfläche 10c.

### Bezugszeichen

| | | | |
|---|---|---|---|
| 10a | Touch-Bedienoberfläche | 28b | dielektrisches Element |
| 10b | Touch-Bedienoberfläche | 30a | Federelement |
| 10c | Touch-Bedienoberfläche | 30b | Federelement |
| 12a | Bedienblende | 30c | Federelement |
| 12b | Bedienblende | 32a | Kochfeldplatte |
| 12c | Bedienblende | 32b | Kochfeldplatte |
| 14a | Sensorplatte | 32c | Kochfeldplatte |
| 14b | Sensorplatte | 34a | Finger |
| 14c | Sensorplatte | 34b | Finger |
| 16a | Signalübertragungseinheit | 34c | Finger |
| 16b | Signalübertragungseinheit | 36a | Finger |
| 16c | Signalübertragungseinheit | 36b | Finger |
| 18a | Leitelement | 36c | Finger |
| 18b | Leitelement | 38a | Kochzone |
| 18c | Leitelement | 40a | elektrisches Feld |
| 20a | Touch-Sensoreinheit | 40b | elektrisches Feld |
| 20b | Touch-Sensoreinheit | 40c | elektrisches Feld |
| 20c | Touch-Sensoreinheit | | |
| 22a | Abschirmeinheit | | |
| 22b | Abschirmeinheit | | |
| 22c | Abschirmeinheit | | |
| 24a | leitfähige Beschichtung | | |
| 24b | leitfähige Beschichtung | | |
| 24c | leitfähige Beschichtung | | |
| 26b | elektrisch leitendes Element | | |
| 26c | elektrisch leitendes Element | | |
| 28a | dielektrisches Element | | |

## Patentansprüche

1. Hausgerätebedienvorrichtung, insbesondere Kochfeldbedienvorrichtung, mit einer eine Touch-Bedienoberfläche (10a; 10b; 10c) umfassenden Bedienblende (12a; 12b; 12c), einer unterhalb der Touch-Bedienoberfläche (10a; 10b; 10c) angeordneten Sensorplatte (14a; 14b; 14c) und einer Signalübertragungseinheit (16a; 16b; 16c), die die Sensorplatte (14a; 14b; 14c) mittels eines Leitelements (18a; 18b; 18c) mit einer Touch-Sensoreinheit (20a; 20b; 20c) elektrisch leitend verbindet, wobei die Signalübertragungseinheit (16a; 16b; 16c) zumindest eine Abschirmeinheit (22a; 22b; 22c) aufweist, wobei die Abschirmeinheit (22b; 22c) zumindest ein mit einem Referenzspannungsanschluss verbundenes elektrisch leitendes Element (26b; 26c) umfasst, welches dazu vorgesehen ist, ein elektrisches Feld des Leitelements (18b; 18c) abzuschirmen, wobei das elektrisch leitende Element (26b; 26c) in einer zur Touch-Bedienoberfläche (10b; 10c) parallelen Richtung zumindest teilweise seitlich neben dem Leitelement (18b; 18c) angeordnet ist, **dadurch gekennzeichnet, dass** das elektrisch leitende Element (26c) das Leitelement (18c) nahezu vollständig bis auf eine Ausnehmung in einer Umgebung der Sensorplatte (14c) umgreift.

2. Hausgerätebedienvorrichtung nach Anspruch 1, **dadurch gekennzeichnet, dass** die Sensorplatte (14a; 14b; 14c) und die Touch-Sensoreinheit (20a; 20b; 20c) wesentlich beabstandet sind.

3. Hausgerätebedienvorrichtung nach einem der vorhergehenden Ansprüche, **dadurch gekennzeichnet, dass** der Referenzspannungsanschluss ein Erdungsanschluss ist.

4. Hausgerätebedienvorrichtung nach einem der vorhergehenden Ansprüche, **dadurch gekennzeichnet, dass** das elektrisch leitende Element (26b; 26c) zumindest teilweise zwischen der Bedienblende (12b; 12c) und dem Leitelement (18b; 18c) angeordnet ist.

5. Hausgerätebedienvorrichtung nach einem der vorhergehenden Ansprüche, **dadurch gekennzeichnet, dass** die Abschirmeinheit (22a; 22b) zumindest ein dielektrisches Element (28a; 28b) umfasst, welches dazu vorgesehen ist, das Leitelement (18a; 18b) elektrisch abzuschirmen.

6. Hausgerätebedienvorrichtung nach Anspruch 5, **dadurch gekennzeichnet, dass** das dielektrische Element (28a; 28b) zumindest teilweise zwischen der Bedienblende (12a; 12b) und dem Leitelement (18a; 18b) angeordnet ist.

7. Hausgerätebedienvorrichtung nach einem der vorhergehenden Ansprüche, **dadurch gekennzeichnet, dass** die Signalübertragungseinheit (16a; 16b; 16c) ein Federelement (30a; 30b; 30c) umfasst, das dazu vorgesehen ist, das Leitelement (18a; 18b; 18c) mit der Touch-Sensoreinheit (20a; 20b; 20c) elektrisch leitend zu verbinden.

8. Hausgerät, insbesondere Glaskeramikkochfeld, mit einer Hausgerätebedienvorrichtung nach einem der vorhergehenden Ansprüche.

## Claims

1. Domestic-appliance-operating device, in particular hob-operating device, having an operating panel (12a; 12b; 12c) which comprises a touch operating surface (10a; 10b; 10c), a sensor plate (14a; 14b; 14c) which is arranged beneath the touch operating surface (10a; 10b; 10c), and a signal-transmission unit (16a; 16b; 16c), which connects the sensor plate (14a; 14b; 14c) to a touch sensor unit (20a; 20b; 20c) in an electrically conductive manner by means of a conducting element (18a; 18b; 18c), wherein the signal-transmission unit (16a; 16b; 16c) has at least one screening unit (22a; 22b; 22c), wherein the screening unit (22b; 22c) comprises at least one electrically conductive element (26b; 26c), connected to a reference voltage terminal, which is provided to shield an electrical field of the conducting element (18b; 18c), wherein the electrically conductive element (26b, 26c) is arranged at least partially on the side adjacent to the conducting element (18b; 18c) in a parallel direction to the touch operating surface (10b; 10c), **characterised in that** the electrically conductive element (26c) encompasses the conducting element (18c) almost completely with the exception of one recess in the vicinity of the sensor plate (14c).

2. Domestic-appliance-operating device according to claim 1, **characterised in that** the sensor plate (14a; 14b; 14c) and the touch sensor unit (20a; 20b; 20c) are spaced well apart.

3. Domestic-appliance-operating device according to one of the preceding claims, **characterised in that** the reference voltage terminal is an earth terminal.

4. Domestic-appliance-operating device according to one of the preceding claims, **characterised in that** the electrically conductive element (26b; 26c) is arranged at least partially between the operating panel (12b; 12c) and the conducting element (18b; 18c).

5. Domestic-appliance-operating device according to one of the preceding claims, **characterised in that** the screening unit (22a; 22b) comprises at least one dielectric element (28a; 28b) which is provided to electrically shield the conducting element (18a; 18b).

6. Domestic-appliance-operating device according to claim 5, **characterised in that** the dielectric element (28a; 28b) is arranged at least partially between the operating panel (12a; 12b) and the conducting element (18a; 18b).

7. Domestic-appliance-operating device according to one of the preceding claims, **characterised in that** the signal-transmission unit (16a; 16b; 16c) comprises a spring element (30a; 30b; 30c) which is provided to connect the conducting element (18a; 18b; 18c) to the touch sensor unit (20a; 20b; 20c) in an electrically conductive manner.

8. Domestic appliance, in particular glass ceramic hob, with a domestic-appliance-operating device according to one of the preceding claims.

## Revendications

1. Dispositif de commande d'appareil ménager, en particulier dispositif de commande de table de cuisson, avec un bandeau de commande (12a; 12b; 12c) comprenant une surface de commande tactile (10a; 10b; 10c), une plaque de capteurs (14a; 14b; 14c) disposée sous la surface de commande tactile (10a; 10b; 10c) et une unité de transmission de signal (16a; 16b; 16c) qui relie de façon électriquement conductrice la plaque de capteurs (14a; 14b; 14c) au moyen d'un élément conducteur (18a; 18b; 18c) à une unité de capteurs tactile (20a; 20b; 20c), dans lequel l'unité de transmission de signal (16a; 16b; 16c) présente au moins une unité de blindage (22a; 22b; 22c), dans lequel l'unité de blindage (22b; 22c) englobe au moins un élément conducteur d'électricité (26b; 26c) relié à une borne de tension de référence, lequel est prévu afin de blinder un champ électrique de l'élément conducteur (18b; 18c), l'élément conducteur d'électricité (26b; 26c) étant disposé, dans une direction parallèle à la surface de commande tactile (10b; 10c), au moins en partie latéralement à côté de l'élément conducteur (18b; 18c), **caractérisé en ce que** l'élément conducteur d'électricité (26c) entoure pratiquement intégralement l'élément conducteur (18c) hormis un évidement dans un environnement de la plaque de capteurs (14c).

2. Dispositif de commande d'appareil ménager selon la revendication 1, **caractérisé en ce que** la plaque de capteurs (14a; 14b; 14c) et l'unité de capteurs tactile (20a; 20b; 20c) sont significativement distantes.

3. Dispositif de commande d'appareil ménager selon l'une des revendications précédentes, **caractérisé en ce que** la borne de tension de référence est une borne de mise à la terre.

4. Dispositif de commande d'appareil ménager selon l'une des revendications précédentes, **caractérisé en ce que** l'élément conducteur d'électricité (26b; 26c) est au moins en partie disposé entre le bandeau de commande (12b; 12c) et l'élément conducteur (18b; 18c).

5. Dispositif de commande d'appareil ménager selon l'une des revendications précédentes, **caractérisé en ce que** l'unité de blindage (22a; 22b) englobe au moins un élément diélectrique (28a; 28b) prévu afin de blinder électriquement l'élément conducteur (18a; 18b).

6. Dispositif de commande d'appareil ménager selon la revendication 5, **caractérisé en ce que** l'élément diélectrique (28a; 28b) est au moins en partie disposé entre le bandeau de commande (12a; 12b) et l'élément conducteur (18a; 18b).

7. Dispositif de commande d'appareil ménager selon l'une des revendications précédentes, **caractérisé en ce que** l'unité de transmission de signal (16a; 16b; 16c) englobe un élément à ressort (30a; 30b; 30c) prévu afin de relier de façon électriquement conductrice l'élément conducteur (18a; 18b; 18c) à l'unité de capteurs tactile (20a; 20b; 20c).

8. Appareil ménager, en particulier table de cuisson vitrocéramique avec un dispositif de commande d'appareil ménager selon l'une des revendications précédentes.
